# EUROPEAN PATENT APPLICATION

(11) **EP 4 686 932 A1**
(43) Date of publication of application: **04.02.2026**
(21) Application number: 24191811.9
(22) Date of filing: 30.07.2024
(51) Int. Cl.: G01N 21/64, G02B 21/16, G01N 1/28, G02B 21/36, G02B 27/56

(54) **METHOD AND SYSTEM FOR TOTAL INTERNAL REFLECTION MICROSCOPY IMAGING OF LARGE SAMPLES**

(71) Applicant: Schneider, Adrian, 14513 Teltow (DE)
(72) Inventor: Schneider, Adrian, 14513 Teltow (DE)
(74) Representative: Weickert, Jonas

(57) **Abstract**

A method for total internal reflection microscopy imaging of a sample and a system for total internal reflection microscopy imaging to carry out the method steps, are described, the method comprising the steps of (a) providing the sample; (b) placing a light coupling medium over a surface of the sample, the light coupling medium having a light incoupling portion and a light outcoupling portion, wherein the light outcoupling portion of the light coupling medium is in optical contact with the surface of a top layer of the sample; (c) imaging the top layer of the sample through the light coupling medium, to obtain an image of the top layer; (d) removing at least partially the top layer, thereby revealing a new top layer of the sample; and repeating steps (b) to (d) for one or more new top layers; wherein the light coupling medium has a refractive index of at least 1.4, and wherein the refractive index of the light coupling medium is higher than a refractive index of the sample; wherein excitation energy for imaging the top layer is provided via an evanescent field formed in the top layer of the sample at the interface with the light coupling medium; and wherein combining the obtained images generates a three-dimensional image of the sample.

## Description

The present invention relates to the field of optical microscopy imaging, and in particular to a method and system to carry out optical microscopy imaging of a sample with enhanced axial resolution, and preferably of a biological sample, to obtain a three-dimensional image of the sample.

Complex samples, and particularly biological samples with inherent structural organization complexity of their many and varied internal components, extending in all three dimensions, present a challenge to the imaging community. Imaging such samples requires careful preparation and tedious processing of the prepared tissue for a variety of microscopy methodologies, often providing a limited volume to be imaged, while the whole three-dimensional extension of complex inner structures may be appreciated with ever increasing lateral resolution only at the expenses of axial resolution.

Imaging methodologies exist that can probe biological or molecular structures at the nanometer scale. However, such methodologies carry severe limitations with respect to the sample size. In biological tissues, scattering dominates over absorption and prevents appreciation of how inner structures enfold within larger volumes, across the entire thickness of a sample.

Further, both physical slicing methods and optical slicing techniques in combination with optical microscopy allow delivery of micrometer axial resolution in samples up to a few tens of micrometers, by imaging individual sections or slices of a large sample. However, physical slices are prepared individually and fixed for imaging on appropriate substrates, to adapt to the imaging conditions utilized in most commercial microscopes. The physical slicing and subsequent fixation processes may alter morphological features of most samples, owing to the further handling and the necessity for the samples to interact with the surface of a suitable substrate. This way, the slices of the sample may undergo to physical strain, contamination, and loss of those qualities that make it useful to image a sample section by section, slice by slice, layer by layer or volume by volume.

Other techniques, employing optical slicing, apply clarification methodologies to the sample, therefore rendering the sample transparent to commonly used imaging wavelengths by removing, at least partially, the major sources of opacity and refractive index impairments, such as e.g. lipids and water. The clarified samples may be imaged across their thickness, but the available clarification techniques mostly alter the physical dimension of the sample and the dimensional relationships between different internal structures of the sample. This technology therefore may not provide immediate information about unadulterated native structures within a sample, as it may be desirable in biology or biotechnology. It is further noted that information about minute details of such structures may be lost also in view of the limited reach of the available microscopy methods.

Using longer wavelengths may provide a deeper look into thicker biological samples. For example, techniques such as two-photon microscopy allow reaching approximately 1 mm into a thick sample owing to scattering reduction at longer wavelengths. Simultaneous application of super resolution microscopy, such as, for example, structured illumination microscopy (SIM), photoactivated localization microscopy (PALM), stochastic optical reconstruction microscopy (STORM), stimulated emission depletion microscopy (STED) or minimal photon fluxes microscopy (MINFLUX), to improve lateral resolution, is however still challenging for thicker samples.

It is an object of the present invention to provide a method and a system for total internal reflection microscopy imaging of samples, in particular of large samples, which proposes to at least partially address and/or overcome the challenges of the art. In particular, a method and a system according to the present invention may provide increased axial and lateral resolution and may yield a three-dimensional image of a large sample.

This object is achieved according to the present invention by a method with the features of claim 1 and a system with the features of claim 9. Further embodiments are apparent from the dependent claims.

The invention allows imaging samples of different sizes. Typical samples prepared in a laboratory may include desiccated thin films containing biological structures, provided on microscope coverslips. Such samples are usually not thicker than a micrometer and allow for a limited and decontextualized microscopy investigation. In these samples, in fact, substructures may be often seen in isolation from the native anatomy. On the other hand, typical samples of native tissues, retrieved for biological studies and containing interesting sub-micrometer features, may however comprise thick specimens in the millimeter or centimeter range, and variable width, equally in the order of millimeters or centimeters. Conventional imaging methods would require that these samples be sectioned, and thin slices or sections thereof fixed to a coverslip. This way, again, a limited and decontextualized investigation may be carried out, still lacking the global visualization of the whole substructures within their native context. Further, high lateral resolution is generally achieved using techniques that may only address a limited area of the sample at a time, so that tedious imaging procedures have to be repeated even for samples that are only one micrometer wide. While samples ranging from 1 to 10 micrometers in thickness may still be imaged using the techniques herein described, the invention may be particularly useful for imaging samples whose thickness extends beyond that used for most conventional microscopy techniques. These samples may be understood as large samples, because of their size relative to conventional samples. Large samples according to the present invention may be considered samples having a thickness extending up to millimeters or centimeters in height, for instance comprising a height of at least 1 millimeter, at least 5 millimeters, or at least 10 millimeters, and up to a few centimeters in thickness. Any width within a reasonable range, according to current automated acquisition methodologies and methodologies to provide samples for imaging, e. g. excise tissue samples in order to derive meaningful information, could be accommodated. In the following, the measurements referring to a "sample" may be understood to refer to a specimen that will have been prepared for imaging, so that it will have undergone preparation processing. While the general absolute measurements may vary between a "sample" and a specimen in its native state, the relationships between these dimensions may be understood to be preserved or to be known, depending on the preparation technique employed. The exemplarily indicated dimensions such as thickness, width, or length may specifically relate to an imaged portion of the sample, i.e. these dimensions may define an imaged volume, and in particular not merely a volume of the physical sample that is imaged including non-imaged parts. However, further specific features of possible samples according to the present method and system may be discussed throughout the description. It will be apparent to the skilled person that further typologies of samples not explicitly mentioned in the description may be used directly or adapted and prepared for use with the method and system of the present invention. It is understood that current limitations with respect to the sample size may be related to the temporary or permanent data storage capabilities of a chosen or available setup, used to carry out the method herein described, as well as to image acquisition and processing capabilities, such as, for example, stitching of several images, each of a different portion of a same layer, or to any combination of such capabilities. Once such limitations will be overcome, the sample size may not be restricted to the given values.

In an aspect of the present invention, a method for total internal reflection microscopy imaging of a sample is described, the method comprising the steps of providing the sample; placing a light coupling medium over a surface of the sample, the light coupling medium having a light incoupling portion and a light outcoupling portion, wherein the light outcoupling portion of the light coupling medium is in optical contact with the surface of a top layer of the sample; imaging the top layer of the sample through the light coupling medium, to obtain an image of the top layer; removing at least partially the top layer, thereby revealing a new top layer of the sample; and repeating the steps of placing a light coupling medium over a surface of the sample, imaging, and removing at least partially the top layer, for a plurality of new top layers; wherein the light coupling medium has a refractive index of at least 1.4, and wherein the refractive index of the light coupling medium is higher than a refractive index of the sample; wherein excitation energy for imaging the top layer is provided via an evanescent field formed in the top layer of the sample at the interface with the light coupling medium; and wherein combining images of consecutive layers of the sample generates a three-dimensional image of the sample.

Total internal reflection microscopy imaging is a known imaging technique, usually in combination with or comprising fluorescence imaging methods, that allows the excitation of a small region of a sample, within a few and a few hundreds of nanometers in depth, at the interface between the sample and a medium preferably having a refractive index higher than the refractive index of the sample or of the sample region. An advantage of total internal reflection microscopy imaging is the localized volume of delivery of the excitation energy, which prevents, reduces or overall avoids bleaching of emitters within the sample, in particular outside of the excitation region. The excitation energy provided by total internal reflection microscopy imaging is typically confined to a region extending from about 10 nanometers to about 400 nanometers in the sample and is delivered via an evanescent field. A short explanation of total internal reflection is provided in the following. Light that is directed at the interface between mediums having different refractive indices will undergo refraction, and namely will proceed at an angle deviating from the angle of incidence and deviating from a normal to the interface. In particular, light incident at the interface between mediums having different refractive indices and traveling from the medium with higher refractive index to the medium with lower refractive index will have an increased angle of refraction withing the medium with the lower refractive index. As the angle of incidence of light in the medium with the higher refractive index increases, so will its angle of refraction in the medium with the lower refractive index. An angle of incidence at which the angle of refraction becomes 90 degrees with respect to the normal to the interface is called a critical angle. When the angle of incidence exceeds such critical angle, light will be reflected within the medium with the higher refractive index from where it had been traveling. This phenomenon is known as total internal reflection, and the medium with the lower refractive index is usually the sample. As discussed for example in the review article by D. Axelrod in Traffic 2001; 2: 764-774, or by K. N. Fish in Curr. Protoc. Cytom. 2009 Oct; 0 12: Unit12.18., this technique, in particular when coupled with fluorescence microscopy, and namely total internal reflection fluorescence microscopy (TIRFM), is of great interest to the study of biological phenomena at a surface. Total internal reflection microscopy may be further used in other photonics application to investigate for example two-dimensional materials. Total internal reflection microscopy provides a mediated excitation through an evanescent wave extending, in the condition specified above, throughout a thin layer within the medium with the lower refractive index. The intensity of the evanescent field within the medium with lower refractive index, e.g., the sample, is higher near the interface within such medium, e.g., the sample, and decreases exponentially with increasing distance from the interface within the medium.

Several types of useful total internal reflections exist, such as frustrated total internal reflection and attenuated total reflectance, which may also apply to the specific conditions of the coupling between a specific sample and a specific light coupling medium. Further, axial resolution using the mentioned techniques may be further improved by assessment with respect to the point spread function detected for emitters within the sample. By observing the orientation and shape of the point spread function, information about the z position of a given emitter within a layer, and further within the sample, may be derived, further increasing the overall resolution of the method herein described.

A sample according to the method and system herein described may be a biological sample, such as for example a tissue sample, a generally organic sample, or an inorganic sample. Any sample that can withstand and fits the imaging conditions of the present method and system either in their native state or that is able undergo any preparatory treatment to fit those conditions may be a sample according to the method and system herein described, or any combination thereof.

The system and method are very useful for imaging a sample that is a biological tissue sample. Such samples contain complex substructures worth of optical analysis, that can further research in several fields of biological sciences. However, in other applications samples may include non-biological samples, for example as used in the manufacturing of laser nanodevices or other nanotechnologies applications, or doped nanomaterials comprising two-dimensional layers for the manufacturing of solar cells, or any other sample that may be sliced, sectioned, ablated, or from which layers may be removed with any suitable methods, including e.g. stripping.

Light coupling mediums in the meaning of the method and system herein described may comprise a number of different devices, whose function is to couple light from a light source into a sample, to provide excitation energy to the sample, or portions, layers, areas, volumes or regions thereof. For this purpose, light coupling mediums may comprise a light incoupling portion, to receive the incoming excitation light provided from a light source, or from a light source within an optical system, and a light outcoupling portion, to transmit the excitation light, or excitation energy to a sample. A light incoupling portion is typically intended as the portion of the light coupling medium deputed to receive the incoming light from an appropriate light source. A light outcoupling portion may be suitable for transmitting light to the sample and may therefore suitably be brought into contact with a surface of the sample, wherein the contact may be, in particular, an optical contact. In particular, the light outcoupling portion of a suitable light coupling medium according to the present invention may comprise a smooth, transparent surface, wherein the roughness of the surface, for example within a range from a few Angstrom to a few nanometers, may enable the smooth, transparent surface in the light outcoupling portion of the light coupling medium to rest flat, or substantially flat, on a top surface of the sample, comprised in a top layer of the sample. For efficient, and or effective transmission of excitation energy, it may be preferable that the light outcoupling portion be in contact with such top surface of the sample, comprised in a top layer of the sample, wherein contact may include several arrangements between a light coupling medium and a top surface of the sample, comprised in a top layer of the sample. Such arrangements may include a substantially total physical contact or at least a partial physical contact, and include an optical contact, wherein the optical contact may comprise a physical contact of any type. An optical contact may therefore not include a direct physical contact between the light coupling medium and the sample. In some configurations it is possible that a partial physical contact or an optical contact may include a further material with a generally lower refractive index than the refractive index of the light coupling medium, such as e.g. a gas, a liquid or a different material or a different state of such material, or vacuum, and namely with a refractive index of 1, according to the conditions of the general experimental environment or of the microenvironment comprised between the light outcoupling portion of the light coupling medium and a top surface of a top layer of the sample; this further material or vacuum may provide closure of the gap, which may be a sub-wavelength gap, preferably at an atomic or nanometer level, that may arise from a partial contact between the light outcoupling medium and a surface of a top layer of the sample or from an optical contact wherein no contact between the light coupling medium and the sample may be achieved. This further material may be a further light coupling medium which may combine with a light coupling medium as described above and may therefore constitute in such combination a light coupling medium according to the framework of the present invention. A further contact between the light outcoupling portion of the light coupling medium and a top surface of a top layer of the sample in the meaning of the present invention may be represented by an optical contact, wherein excitation energy may be transferred from the light outcoupling portion to a top layer of the sample, and wherein excitation energy losses may be neglectable. Further, the layer-removing device may comprise for example, the light coupling medium, which may be at least partially integrated with the layer-removing device to achieve a close contact excitation of the sample and layer removal, simultaneously or in-situ.

According to a further aspect a method for total internal reflection microscopy imaging of a sample is described, wherein the light coupling medium comprises a waveguide, a cryo-fluid, a prism, or a solid immersion lens, or any combination thereof. Suitable examples of light coupling mediums in the regime of optical microscopy and in the meaning of the present invention may be, therefore, waveguides, such as optical waveguides or light waveguides. However, waveguides for different electromagnetic wave ranges may still be employed if suitable for the application-specific ranges of electromagnetic wave utilized.

Waveguides, optical waveguides, light waveguides or light wave plates for the system and method may include a large variety of materials, types and implementation. In the following at least a subgroup of such waveguides will be described, which may be readily used. Further, other implementations allowed within the framework of the system and method will be appreciated by the skilled person. Waveguides are understood as devices or structures that guide waves so that their transmission of energy will divert, at least in part, from the expected three-dimensional propagation to, e.g., a propagation in a preferred direction. Further beneficial properties of waveguides or wave plates may include the capability of inducing polarization changes, such as alterations of the direction of oscillation of the electric field of electromagnetic waves within the guide or plate. Polarization of the incident light may provide variations of the intensity of the evanescent field and help in even further customizing the interaction with the sample.

Different materials may be used, such as, e.g., solids, liquids, gases, gels; optical waveguides for the method and system described herein may include materials such as plastic of glass, preferably transparent materials, liquids and oils with a refractive index higher than 1.4. A further example of a suitable waveguide in the framework herein described may be a solid immersion lens. An even further example comprises a cryo-fluid. A further optical waveguide comprises a glass plate having a refractive index higher than 1.4. Such glass plate may be easy to handle and provide the most appropriate optical conditions for total internal reflection microscopy, such as a large imaging and excitation field and a low background noise in view of the localized excitation, and namely via an evanescent field.

Glass in the meaning of the present invention may include a large range of materials, comprising both amorphous materials and crystalline materials. For example, suitable materials for a glass plate may include silica, boron, or alumina oxide, or any combination thereof. Sapphire, quartz, or carbon-based crystalline materials, such as for example diamond, may also be used to provide the glass plate, alone or in combination with the other materials. Other materials may comprise for example fluorozirconate, fluoroaluminate and chalcogenides glasses, or any combination thereof. The choice of material may depend on the wavelength utilized to provide excitation energy to the sample, or from the intended application. Further criteria for the choice of materials may be the ability of obtaining a flat surface by processing the material with appropriate techniques, for example annealing, and the ability to withstand high processing temperatures and low, down to cryogenic, operation temperatures. A further criterion of choice may be represented by the ability of providing a specific type of contact, optical or physical contact, or a combination thereof.

According to the present invention, it is understood that the term contact may include both physical and optical contact in any combination. Other types of contact may be comprised in the meaning of the term contact according to the present invention that the skilled person would be able to derive in view of the given imaging conditions and combination of sample and light coupling medium. In some examples, the skilled person will understand how to functionalize a surface of the sample, to manipulate such contact with a suitable light coupling medium, so that the obtained contact, physical, optical, both or of a different kind, e.g. mediated by vacuum or other material, may enhance the imaging conditions, such as, for example, improving adherence of the light coupling medium to the surface of the sample, or amplifying the optical properties of the interface, or any similar implementation.

According to the present invention, a top layer may be a thin region of the sample removed from the sample using appropriate methodologies. Such thin region may extend from a few nanometers to a few hundreds of nanometers, such as, for example, from about 10 nanometers, 20 nanometer, or 50 nanometer to about 400 nanometers, 600 nanometer, or 800 nanometers, and any possible thickness in between that may be achieved using appropriate layer-removing methodologies in the meaning of the present invention. A layer may be a larger layer than indicated above with respect to a typical top layer, within the thickness of the given sample. A layer according to the invention may be in general a portion of the sample either to be imaged or to be removed, or a section, a slice or a volume. Examples of suitable layer-removing methods in the meaning of the present invention, such as e.g. sectioning or ablating or slicing methods, or any other layer-removing techniques, may comprise ion-beam milling, sectioning knife, or any combination thereof. In ion-beam milling energetic ions, typically high-energy argon ions, may be used for removal of coarseness on a surface of the sample, such as e.g. for removal of surface atoms and imperfections, so that a thin layer of the sample may be removed, and a flat surface may be obtained. Several types of ion-beam milling devices exist, suitable for use at several temperature ranges. Any other similar layer-removing techniques may be employed, according to the desired thickness to be achieved for layer removal, the type of samples, and the imaging conditions and techniques employed. An exemplary protocol to obtain a layer or top layer in the meaning of the present invention may be adapted from Wuttisarnwattana et al., Scientific Reports, (2023) 13:10907.

According to the present invention, a top layer of the sample may be imaged according to the method as described herein. A top layer of the sample may include an outer top surface of the sample. After imaging, the top layer may be removed using any of the above-mentioned suitable techniques or other techniques known in the art. The layer removal may therefore reveal a new top layer of the sample which may be imaged in turn. According to the method herein described, the top layer may be the outermost layer of the sample at the time of imaging, and a new top layer may be a portion of the sample revealed after the removal of the previous top layer. The layers and the top layers may be consecutive to the previous layer and previous top layers, however they may also be not consecutive, so that only portions of the samples may be imaged and not the entire sample. Further, a removed layer may exceed the given dimensions, in particular the thickness, so that a larger portion or layer of the sample may be removed. An imaged layer may be comprised in a larger layer, for example when imaging such layer provides valuable information only of the imaged layer and a subsequent new top layer may not be subsequent or adjacent to a previously imaged layer.

According to a further aspect of the method for total internal reflection microscopy imaging of a sample herein described at least one of the layers has a thickness in a range from 10 to 400 nanometers, and preferably from 20 to 300 nanometers, more preferably from 35 to 250 nanometers, and even more preferably from 50 to 150 nanometers. Layers of these sizes may be entirely excited via the evanescent field which may concentrate within these typical distances from the source, and wherein the evanescent field decays exponentially in a z direction within the sample, normal to an interface between mediums of different refractive index, when light travels from the medium with higher refractive index, or higher optical density, to the medium with lower refractive index, or lower optical density.

The acquired images of top layers of the sample may be eventually combined using known automated digital methodologies to obtain a three-dimensional image of the sample, in particular combining images of consecutive, adjacent layers. However, three-dimensional images of specific regions of the sample may be obtained, wherein a region comprises one of more layers, combining images of such layers. In particular, applying a light coupling medium, e.g. a glass plate, to a top layer of the sample, imaging the top layer using total internal reflection microscopy alone or in combination with other microscopy techniques, e.g. super resolution microscopy techniques, then removing the top layer revealing a new top layer, placing the light coupling medium on the new top layer and imaging the new top layer, then repeating this process for several new top layers, may yield images of several consecutives top layers which combined may yield an image of at least a portion of the sample. A three-dimensional image may be obtained combining images of layers, in particular top layers, which are not consecutives, for example to assess periodic features of a particular sample, or repeating structures or for any other similar purpose.

According to a further aspect a method for total internal reflection microscopy imaging of a sample is described, further comprising the step of providing relative movement between the sample and an imaging system provided to carry out step (c), the relative movement being mediated by a computer-controlled translation stage. A computer-controlled translation stage may comprise a motorized translation stage, linear translation stages, piezoelectric scanning stages and several variations and combinations thereof. Using a computer-controlled translation stage may provide a controlled relative positioning between the sample and an imaging system for imaging the sample. A number of arrangements may be comprised in the meaning of the present invention, wherein the sample may move relative to the imaging system, the imaging system, or parts thereof, may move relative to the sample, or both sample and imaging system may be mounted on translation or scanning stages and move relative to one another and to an external stationary reference system. As mentioned, a translation or scanning stage may be based on piezoelectric components, wherein the piezoelectric materials may provide accurate displacement in response to a provided voltage. Further, translation or scanning stages may be linear translation or scanning stages. In further aspects of the invention, translation or scanning stages may comprise interferometer-mediated accurate positioning. Such interferometer-controlled stages may provide high accuracy in the relative placement of a sample with respect to a light source, in particular they may enable retrieval of a previously held position, for example when imaging several layers and may enable correlating the positioning of features in one layer with similar features, or continuations of the same features in a further layer. Overall, positioning accuracy during optical measurements such as imaging, may be beneficial for measurement efficiency and accuracy, to precisely address areas of the sample, or for generally accurate reproduction of imaging conditions over several layers and repositioning of the light coupling medium and any other related operation. Further, translation or scanning stages according to the present invention may further comprise vibration detection and compensation systems, which may aid in retrieving positions, maintaining position and steady illumination of a given area of a layer to be imaged, and may provide overall stable imaging conditions that improve experimental repeatability and reproducibility of imaging conditions.

According to a further aspect of the method herein described the step of removing at least partially the top layer, thereby revealing a new top layer of the sample, is carried out with a knife, such as for example a diamond knife, and wherein at least a portion of the knife is formed as the light coupling medium. In an aspect of the method, a knife may comprise the light coupling medium, for example a suitable light coupling medium for a diamond knife may be a diamond, and the removing step may be carried out simultaneously to the imaging step. According to this aspect, the light coupling medium may be comprised in the knife while the knife is in contact with the sample, in particular with a surface of a top layer of the sample, or an outer surface of the sample. The light coupling medium comprised in the knife may therefore also be in contact with the surface of a top layer of the sample, or an outer surface of the sample, so that it may couple light from the light or illumination source into the sample, while or after, in particular immediately after, the removing step is being carried out. Consequently, an imaging step may be carried out while the light coupling medium of the knife couples light into the sample, i.e., the contact between the knife and the sample provides for a suitable contact for light incoupling. In alternative, the step of imaging may be carried out after the completion of the removal. For example, the imaging step may be carried out after the removing step without moving the knife in between. For instance, a final position of the knife at the end of the removing step may be the position of the knife during the imaging step. Said position may particularly be a position which allows light coupling from the knife to the sample.

The use of positioning means may facilitate retrieval of initial coordinates and revert the knife to a suitable starting point on demand. It is understood that a knife in the meaning of the method herein described may generally be a layer-removing device, such as, for example, an ablating device, a sectioning device, or a slicing device, therefore any device which may be apt to remove, either destructively or conservatively, a layer, a top layer or in any case a portion of the sample. In any of the envisioned configurations, the integration or the at least partial integration, may substantially reduce experimental times, for example image acquisition times, and may further improve the excitation efficiency by providing a closer physical and optical contact between the light coupling medium and layer to be imaged. The skilled person would understand that notwithstanding such embodiments as just described, and namely wherein the layer-removing device is at least partially integrated with the optical system and comprises a knife, such as for example a diamond knife, and wherein at least a portion of the knife is formed as the light coupling medium, the main features and functions of the light coupling medium as described at length above may be preserved.

According to a further aspect a method for total internal reflection microscopy imaging of a sample is described wherein the sample is a frozen-hydrated sample and wherein the light coupling medium is a cryocooled light coupling medium. The sample may be frozen-hydrated according to typical standards in the field. For example, such conditions may be applied to a sample by any known vitrification process, such as plunge freezing or high pressure freezing, which may reveal adequate for preservation of sample structures and dimensional relationships. An exemplary protocol may be provided by Saubermann et al., Journal of Microscopy, Vol. 105, Pt 2, November 1975, pp. 155-191. In particular, freezing-hydrating samples for carrying out the method may preserve native structures of the sample to be imaged, or may be used to alter the refractive index of the sample, or may enable higher resolution detection of emission upon excitation of native structures, comprising native structures coupled, linked to or labeled by fluorophores. Preserving native structures, their dimensional relationships and their relative positioning within a sample may enable effective imaging of such structures and a meaningful understanding of their role within the sample, and within the larger body from which the sample has been excised, whether the sample is a biological sample or a type of crystalline structure containing impurities, or any other kind of structure that may be beneficially studied using total internal reflection microscopy, comprising fluorescence microscopy and super resolution techniques. Further, a frozen-hydrated sample may enable a better coupling with a light coupling medium, such as a glass plate in an aspect of the method, in view of the possibility of obtaining a flat and smooth surface. Accordingly, a cryocooled light coupling medium maybe used in combination with such frozen-hydrated sample for carrying out the method. The combination of a cryocooled light coupling medium placed over the frozen-hydrated sample, and in particular on a surface of a top layer of the frozen-hydrated sample may provide better matching between the light outcoupling portion of the light coupling medium and the flat, smooth surface of a top layer of the frozen-hydrated sample. This in turn may provide a more efficient excitation of the sample, e.g. of the top layer of the sample. The cryocooled light coupling medium, for example a cryocooled glass plate, may reduce the thermal shock between the surface and reduce, prevent or avoid thermal deterioration at the interface between the sample and the light coupling medium. Further, the propagation of light through a cryocooled medium may be improved, by the cryocooling possibly reducing, preventing or avoiding thermal losses due to thermal fluctuations. Moreover, this type of sample preparation may favor quantitative analysis of the samples, complementing several types of imaging methods with the ability of applying for example automated particle recognition and algorithmic approaches.

According to a further aspect, a method for total internal reflection microscopy imaging of a sample is described wherein the sample comprises fluorophores. The sample may comprise fluorophores of different types, including typical fluorophores used in biology or in similar application and inorganic or organic crystal growth, such as fluorescent fusion proteins, e.g., green fluorescent protein, yellow fluorescent protein, red fluorescent proteins; small chemical compounds such as fluorescein, cyanin, and related compounds and derivatives; amino acids, e.g. tryptophan, tyrosine, phenylalanine; other dyes, quantum dots, or any working combination thereof, which is suitable for the application at end. The use of fluorophores may be useful when further combining total internal reflection microscopy with fluorescence microscopy, or with super resolution microscopy techniques, or any combination thereof, owing to the higher signal-to-noise ratio provided by any of the chosen fluorophores. Labeling may increase lateral resolution of the structures to be imaged within the imaged layer, top layer, or within the sample as a whole. Further features of chosen fluorophores may include a large Stokes shift, i.e. a large difference between the positions of the maxima of the absorption and emission spectra of the same electronic transition, so that using fluorescence methods, the detection of the fluorescence emission may be easier and the results more distinct.

According to a further aspect a method for total internal reflection microscopy imaging of a sample is described wherein the step of imaging comprises super resolution fluorescence microscopy. Super resolution fluorescence microscopy techniques such as, for example, structured illumination microscopy (SIM), photoactivated localization microscopy (PALM), stochastic optical reconstruction microscopy (STORM), stimulated emission depletion microscopy (STED) or minimal photon fluxes microscopy (MINFLUX), may be simultaneously or subsequently applied to enhance the specificity of the information regarding native structures within a sample, or impurities or any other information with respect to any internal structure of the sample. In combination with the use of fluorophores, as described above, known fluorescent microscopy techniques may be applied in combination with total internal reflection microscopy, further increasing the overall resolution of the method as herein described. For example, conventional fluorescence microscopy methodologies and techniques, such as for example confocal microscopy, may be also enhanced when used in combination with the system of the present invention, as axial resolution may be increased and owing to the evanescent field excitation being localized, background noise is further reduced. Further, the analysis of the point spread function that may be associated to single emitters may further contribute to increasing the axial resolution within each imaging layer or top layer, while super resolution fluorescence microscopy techniques, in combination with total internal reflection fluorescence excitation, may provide increase in lateral resolution.

According to a further aspect of the invention, a method for total internal reflection microscopy imaging of a sample is described wherein at least one of the method steps is carried out at cryogenic temperatures. Cryogenic temperatures are typically lower than -150°C to about absolute zero, or below 120 K. Any step of the method described herein may be carried out at cryogenic temperatures, to increase measurement efficiency, facilitate imaging of sensitive emitters in the sample owing to the absence of deterioration that may be associated with using room temperature measurements, and it may ensure preservation of native structures or any internal structural of the sample during coupling with the light coupling medium, imaging of the sample, e.g. imaging of top layers of the samples, and during subsequent removal of the top layer, by aiding precision removal without distortion of the features of the top layer or layers to be imaged. Further, the use of cryogenic temperatures may facilitate the provision of a flat and smooth surface of a top layer of the sample, e.g. by controlled freezing-hydrating, and therefore the coupling of the top layer with a light coupling medium according to the present invention, for example a glass plate, and a refracting index mismatch that may enable total internal reflection.

According to a further aspect of the invention, a system for total internal reflection microscopy imaging of a sample is provided, the system comprising: a light source configured to provide excitation energy to the sample; an optical system configured to couple the excitation energy from the light source into at least a top layer of the sample, the optical system comprising a light coupling medium having a light incoupling portion and a light outcoupling portion, the light coupling medium having a refractive index of at least 1.4, and wherein the light outcoupling portion of the light coupling medium is configured to be placed in optical contact with a surface of the top layer of the sample; a positioning device configured to provide relative movement between the sample and the light source and/or at least elements of the optical system; an imaging system configured to acquire an image of the top layer of the sample; a layer removing device configured to remove at least partially the top layer of the sample thereafter, and reveal a new top layer; wherein the imaging device is further configured to generate an image of at least a portion of the sample based on images of one or more top layers.

A light source according to the present invention may comprise a laser light source, an array of laser light sources, an LED light source or an array of LED light sources, or any further coherent or incoherent light source. Further, the light source may include continuous or pulsed light sources, in particular pulsed laser light sources. The pulsed illumination may be suited to embodiments wherein super resolution techniques may be employed, such as PALM or STORM, or other similar fluorescence techniques. A specific duration of illumination at a given repetition rate may be beneficial in view of the specific types of fluorophores, for example to reduce bleaching or specifically address excitation states of some of such fluorophores. In general, any light source that is sufficiently able to illuminate a sample, or in case of fluorescence excitation, to excite fluorophores by a sufficient amount to cause release of photons, or detectable emission, may be employed as a light source. Generally, a light source in the meaning of the present invention may also be a light bulb, e.g. a light bulb with for example a broad emission spectrum, comprising suitable wavelength components and intensity for excitation. Any light source whose intensity is sufficient to provide excitation energy to a sample, according to the type of sample, the detection system and the capability of the setup to effectively deliver the excitation energy to the sample through a light coupling medium may be used in the system and to carry out the method described herein.

An optical system within the system according to aspects of the present invention may comprise a number of elements. An optical system be configured to couple the excitation energy from the light source into at least a top layer of the sample. This may be achieved in a number of ways, however typical components of an optical system may comprise transmissive optical elements, such as, for example, lenses, filters, windows, prisms, polarizers, beamsplitters, wave plates, fiber optics and reflective optical elements, such as, for example, mirrors and retroreflectors. Different types of objectives and optical waveguides may also be included. According to the specific application, it would be apparent to the skilled person that a specific selection may apply of an otherwise large list of possible components. Each component may comprise coatings and specific substrates, such as, for example, specific metal coatings to enhance or attenuate transmission or reflection, or substrates such as special types of glass. The optical system may be further configured to couple light into at least a top layer of the sample, for example via a light coupling medium in contact with the sample, wherein the light coupling medium may be, for example, an optical waveguide or a glass plate, as already mentioned and as it will be further specified in the following. Further, parts of the optical system, such as, for example, the light coupling medium, may be integrated or at least partially comprised in other devices of the system, for example the light coupling medium may be comprised in the layer-removing device, to achieve a close contact excitation of the sample and layer removal, simultaneously or in-situ.

In particular, according to a further aspect a system for total internal reflection microscopy imaging of a sample is provided wherein the light coupling medium comprises a waveguide, a cryo-fluid, a prism, a solid immersion lens, or any combination thereof. Suitable examples of light coupling mediums in the regime of optical microscopy and in the meaning of the present invention may be, therefore, waveguides, such as optical waveguides or light waveguides. However, waveguides for different electromagnetic wave ranges may still be employed if suitable for the application-specific ranges of electromagnetic waves utilized.

Waveguides, optical waveguides, light waveguides or light wave plates according to the system of the present invention may include a large variety of materials, types and implementation. In the following at least a subgroup of such waveguides will be described, which may be readily used. Further, other implementations will be appreciated by the skilled person. Waveguides according to the present invention are understood as devices or structures that guide waves so that their transmission of energy will divert, at least in part, from the expected three-dimensional propagation to, e.g., a propagation in a preferred direction. Further beneficial properties of waveguides or wave plates may include the capability of inducing polarization changes, such as alterations of the direction of oscillation of the electric field of electromagnetic waves within the guide or plate. Polarization of the incident light may provide variations of the intensity of the evanescent field and help in even further customizing the interaction with the sample.

Different materials may be used, such as, e.g., solids, liquids, gases, gels; typical optical waveguides according to the present invention may include materials such as plastic of glass, preferably transparent materials, liquids and oils with a refractive index higher than 1.4. A further example of a suitable waveguide in the framework herein described may be a solid immersion lens. An even further example comprises a cryo-fluid. A further optical waveguide comprises a glass plate having a refractive index higher than 1.4. Such glass plate may be easy to handle and provide the most appropriate optical conditions for total internal reflection microscopy, such as a large imaging and excitation field and a low background noise, or high signal-to-noise ratio, in view of the localized excitation, i.e. via an evanescent field.

Glass in the meaning of the present invention may include a large range of materials, comprising both amorphous materials and crystalline materials. For example, suitable materials for a glass plate according to the present invention may include silica, boron, or alumina oxide, or any combination thereof. Sapphire, and quartz, or carbon-based crystalline materials, such as for example diamond, may also be used to provide the glass plate, alone or in combination with the other materials. Other materials may comprise for example fluorozirconate, fluoroaluminate and chalcogenides glasses, or any combination thereof. The choice of material may depend on the wavelength utilized to provide excitation energy to the sample, or from the intended application. Further criteria for the choice of materials may be the ability of obtaining a flat surface by processing the material with appropriate techniques, for example annealing, and the ability to withstand high processing temperatures and low, down to cryogenic, operation temperatures. A further criterion of choice may be represented by the ability of providing a specific type of contact, optical or physical contact, or a combination thereof.

According to the system of the present invention, it is understood that the term contact may include both physical and optical contact in any combination. Other types of contact may be comprised in the meaning of the term contact according to the present invention that the skilled person would be able to derive in view of the given imaging conditions and combination of sample and light coupling medium. In some examples, the skilled person will understand how to functionalize a surface of the sample, to manipulate such contact with a suitable light coupling medium, so that the obtained contact, physical, optical, both or of a different kind, e.g. mediated by vacuum or other material, may enhance the imaging conditions, such as, for example, improving adherence of the light coupling medium to the surface of the sample, or amplifying the optical properties of the interface, or any similar implementation.

According to the system of the present invention, a positioning device, or positioning means such as a positioning stage may be comprised, wherein the positioning system provides positioning of the sample or of the optical system or of any of the elements of the optical system or of any combination thereof. The ability to provide relative movements between the sample and any of the components of the system enables better imaging conditions, the possibility of addressing specific areas of the sample, addressing specific features of the sample or providing various types of illumination, including carrying intensity, wavelengths, or applying different imaging techniques.

According to a further aspect a system for total internal reflection microscopy imaging of a sample is provided wherein the positioning device comprises a computer-controlled translation stage. A computer-controlled translation stage may comprise a motorized translation stage, linear translation stages, piezoelectric scanning stages and several variations and combinations thereof. Using a computer-controlled translation stage may provide a controlled relative positioning between the sample and an imaging system for imaging the sample. A number of arrangements may be comprised in the meaning of the present invention, wherein the sample may move relative to the imaging system, the imaging system, or parts thereof, may move relative to the sample, or both sample and imaging system may be mounted on translation or scanning stages and move relative to one another and to an external stationary reference system. As mentioned, a translation or scanning stage may be based on piezoelectric components, wherein the piezoelectric materials may provide accurate displacement in response to a provided voltage. Further, translation or scanning stages may be linear translation or scanning stages. In further aspects of the invention, translation or scanning stages may comprise interferometer-mediated accurate positioning. Such interferometer-controlled stages may provide high accuracy in the relative placement of a sample with respect to a light source, in particular they may enable retrieval of a previously held position, for example when imaging several layers and may enable correlating the positioning of features in one layer with similar features, or continuations of the same features in a further layer. Overall, positioning accuracy during optical measurements such as excitation and imaging, may be beneficial for measurement efficiency and accuracy, to precisely address areas of the sample, or for generally accurate reproduction of imaging conditions over several layers and repositioning of the light coupling medium and any other related operation. Further, translation or scanning stages according to the present invention may further comprise vibration detection and compensation systems, which may aid in retrieving positions, maintaining position and steady illumination of a given area of a layer to be imaged, and may provide overall stable imaging conditions that improve experimental repeatability and reproducibility of imaging conditions.

According to the system for total internal reflection microscopy imaging of a sample of the present invention, an imaging system may comprise conventional and application-specific components or elements, such as a camera or camera sensor, or detectors, coupled to the optical system and the light or illumination source. Typical imaging systems according to the invention may comprise digital components. A digital imaging system may comprise means for image acquisition, archiving communication, retrieval, processing, distribution and display. Such imaging system may be coupled to the positioning system via one or more control units in order to harmonize the imaging process and acquire images or one or more desired areas, regions, layers or volumes of the sample. A computer interface and processing means may facilitate some operation such as communication with the control units on an automated or operator-mediated base. Further components, or application-specific components will be clear to the skilled person as found in the art. The system as described herein may allow a seamless combination among several imaging and data acquisition techniques and allow a large number of different types of layer-by-layer image and data acquisition of any suitable samples. As a result, a complete three-dimensional investigation of a large sample may be carried out in an automated fashion, with increased axial and lateral resolution.

According to the system of the present invention, a layer-removing device configured to remove at least partially the top layer of the sample and reveal a new top layer may comprise for example ion-beam milling, sectioning knife, or any combination thereof. For instance, the layer-removing device may be an ion milling machine, a microtome such as a sledge microtome, a rotary microtome, a cryomicrotome, or a laser microtome. In ion-beam milling, energetic ions, typically high-energy argon ions, may be used for removal of coarseness on a surface of the sample, such as e.g. for removal of surface atoms and imperfections, so that a thin layer of the sample may be removed, and a flat surface may be obtained. Several types of ion-beam milling devices exist, suitable for use at several temperature ranges. Any other similar layer-removing techniques such as sectioning or ablating or slicing methods, or any other layer-removing methodologies, may be employed, according to the desired thickness to be achieved for layer removal, the type of samples, and the imaging conditions and imaging techniques employed. An exemplary protocol to obtain a layer or top layer in the meaning of the present invention may be adapted from Wuttisarnwattana et al., Scientific Reports, (2023) 13:10907.

According to a further aspect of the system herein described the layer-removing device is at least partially integrated with the optical system and comprises a knife, such as for example a diamond knife, wherein at least a portion of the knife is formed as the light coupling medium. In an aspect, a knife may comprise the light coupling medium, for example a suitable light coupling medium for a diamond knife may be a diamond, and the layer-removing function may be carried out simultaneously to the imaging step. According to this aspect, the light coupling medium may be comprised in the knife while the knife is in contact with the sample, in particular with a surface of a top layer of the sample, or an outer surface of the sample. The light coupling medium comprised in the knife may therefore also be in contact with the surface of a top layer of the sample, or an outer surface of the sample, so that it may couple light from the light or illumination source into the sample, while the knife is deployed. Consequently, an imaging step may be carried out while the light coupling medium of the knife couples light into the sample, i.e., the contact between the knife and the sample provides for a suitable contact for light incoupling. In alternative, the step of imaging may be carried out after the completion of the removal. For example, the imaging step may be carried out after the removing step without moving the knife in between. For instance, a final position of the knife at the end of the removing step may be the position of the knife during the imaging step. Said position may particularly be a position which allows light coupling from the knife to the sample.

The use of positioning means may facilitate retrieval of initial coordinates and revert the knife to a suitable starting point on demand. It is understood that a knife in the meaning of the system herein described may generally be a layer-removing device, such for example an ablating device, a sectioning device, or a slicing device, therefore any device which may be apt to remove, either destructively or conservatively, a layer, a top layer or in any case a portion of the sample. In any of the envisioned configurations, the integration or the at least partial integration, may substantially reduce experimental times, for example image acquisition times, and may further improve the excitation efficiency by providing a closer physical and optical contact between the light coupling medium and layer to be imaged. The skilled person would understand that notwithstanding such embodiments as just described, and namely wherein the layer-removing device is at least partially integrated with the optical system and comprises a knife, such as for example a diamond knife, and wherein at least a portion of the knife is formed as the light coupling medium, the main features and functions of the light coupling medium as described at length above may be preserved.

According to a further aspect a system for total internal reflection microscopy imaging of a sample is provided wherein at least part of the system is configured to operate at cryogenic temperatures. Cryogenic temperatures are typically lower than -150°C to about absolute zero, or below 120 K. The system of the present invention, or at least part of such system, may operate at cryogenic temperatures, to increase measurement efficiency, facilitate imaging of sensitive emitters in the sample owing to the absence of deterioration that may be associated with using room temperature measurements, and it may ensure preservation of native structures or any internal structural of the sample during coupling with the light coupling medium, imaging of the sample, e.g. imaging of top layers of the samples, and during subsequent removal of the top layer, by aiding precision removal without distortion of the features of the top layer or layers to be imaged. Further, the use of cryogenic temperatures may facilitate the provision of a flat and smooth surface of a top layer of the sample, e.g. by controlled freezing-hydrating, and therefore the coupling of the top layer with a light coupling medium according to the present invention, for example a glass plate, and a refracting index mismatch that may enable total internal reflection.

According to a further aspect a system for total internal reflection microscopy imaging of a sample is provided further comprising a super resolution fluorescence microscope. Super resolution fluorescence microscopy techniques, such as, for example, structured illumination microscopy (SIM), photoactivated localization microscopy (PALM), stochastic optical reconstruction microscopy (STORM), stimulated emission depletion microscopy (STED) or minimal photon fluxes microscopy (MINFLUX), may be simultaneously or subsequently applied to enhance the specificity of the information regarding native structures within a sample, or impurities or any other information with respect to any internal structure of the sample. In combination with the use of fluorophores in an aspect of the present invention, as described above, any known fluorescent microscopy technique may be applied in combination with total internal reflection microscopy, further increasing the overall resolution of the system as herein described. For example, conventional fluorescence microscopy methodologies and techniques, such as for example confocal microscopy, may be also enhanced when used in combination with the system of the present invention, as axial resolution may be increased and owing to the evanescent field excitation being localized, background noise is further reduced. Further, the analysis of the point spread function that may be associated to single emitters may further contribute to increasing the axial resolution within each imaging layer or top layer, while super resolution fluorescence microscopy techniques, in combination with total internal reflection fluorescence excitation, may provide increased lateral resolution.

According to a further aspect a system for total internal reflection microscopy imaging of a sample is provided further comprising an image processing device configured to process the plurality of images into a three-dimensional image of the sample. An image processing device according to the present invention may include a control unit, a processing unit and a graphical interface. Further, specific algorithms and mathematical models may be used to process and analyze images acquired according to the system of the present invention. The image processing device may be a computer.

According to a further aspect a system for total internal reflection microscopy imaging of a sample is provided further comprising at least one control device configured to carry out the method of any of the previous aspects. Automation of remote driving by a skilled or unskilled operator may be achieved by utilizing a control device, control unit, or controller to carry out instructions to drive any one of the components of a system according to the present invention. Automated sample positioning, or operator-mediated remote sample positioning, remote optical system positioning, remote imaging system positioning, remote layer-removal operation, may provide a higher level of control and a high degree of adaptability of the system to several imaging conditions, without the need to redesign a system enclosure.

Any of the systems according to the present invention may be used with any of the samples herein described. Moreover, any of the methods according to the present invention may be carried out using any of the systems herein described. Any of the methods and system described herein may be carried out under different pressure and atmospheric conditions, such as for example in vacuum. In such cases, the system may comprise an enclosure so that at least part of the systems components may undergo operation under varied pressure conditions. The skilled person would understand that operating in vacuum conditions may enhance imaging conditions, both in terms of excitation and emission, may further ease the preservation of the sample and may facilitate the operation of some system components. Further implementations and routine adjustments to fit application-specific requirements will be apparent to the skilled person.

The system herein described may further comprise a scanning electron microscope (SEM), to image the top layer using scanning methods; or a transmission electron microscope (TEM), to image thin slices, such as for examples removed top layers or layers or at least portions of the sample, from a few nanometers up to 150 nm thick, using the transmission mode. The system may be designed to accommodate both setups when operated under high vacuum. In particular, the system may further comprise an electron source, a series of electromagnetic and electrostatic lenses to shape and control the travel of the electron beam and apertures through which the electrons may travel. The system may further comprise appropriate detectors, such as for example, photomultipliers, to convert the SEM signal into a voltage signal, which is amplified to create the image on a PC screen; or a fluorescent screen directly showing the TEM image or a charge-coupled device (CCD) camera showing the TEM image onto a PC screen. Both techniques may work compatibly with the method herein described and may further enhance spatial resolution of the method by orders of magnitudes. For example, SEM resolution of 0.5 nanometers and TEM resolution of 50 picometers have been reported.

The system may further be modular and suited to different assembly of the constituent parts and configured to adjust to different experimental conditions. It may comprise a kit including alternative components and alternative mediums, objective, further elements of an optical systems, several controlled stages or further connection to a control unit, interferometric means to detect precise positioning in addition to what already provides, and further additional components to enable application to existing facilities, adapters and further connectors to establish connections to the mains. In addition, the kit may comprise instructions and software to run the setup according to any one of the methods herein described.

The following figures illustrate examples of how to carry out the invention described herein. In particular, an example of a system according to the invention and described in the present document is provided in the following. An example of a method according to the invention is also described and illustrated in the following. These examples are intended to provide guidance on how to carry out the invention and offer insight on how to implement several aspects of the invention as herein described. Such examples may not limit the invention, as the skilled person would understand that several possibilities exist to carry out the invention as described in the previous paragraphs in view of the several described and available alternatives and routine modifications.
Figure 1 shows a cross-sectional view of a schematic representation of a system according to an aspect of the invention.
Figures 2a, 2b, 2c, and 2d show exemplary setups according to possible implementations of a system in the meaning of the present invention utilizing different light coupling mediums and different light coupling medium's architectures.
Figure 3 shows a simplified diagram of a basic experimental routine as a possible implementation of the method in the meaning of the present invention.
Figure 4 shows a simplified diagram of a basic automated system in the meaning of the invention.

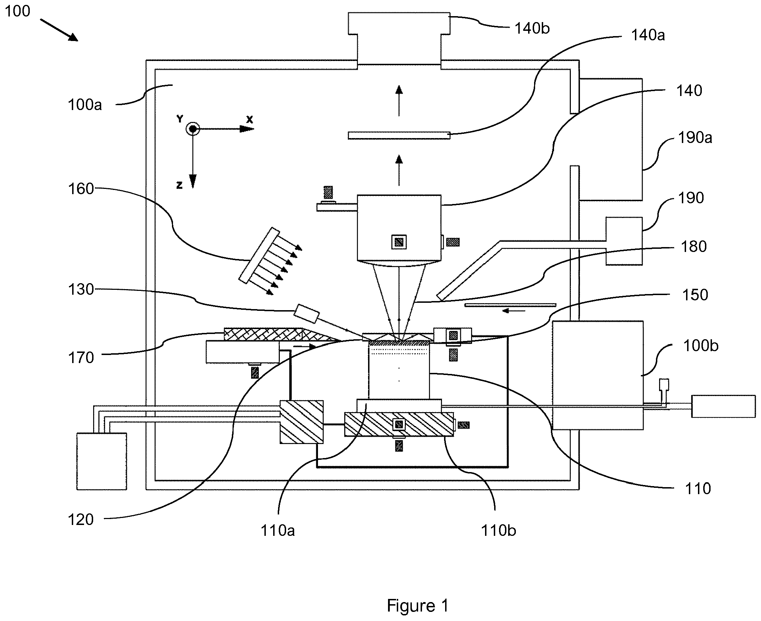

Figure 1 illustrates a schematic high-level representation of an exemplary arrangement of the system 100 herein described. The large sample 110, e.g. a frozen-hydrated or cryocooled tissue sample, is covered with a light coupling medium in the form of a waveguide 120 placed in contact with a top surface of the sample 110. The sample 110 is cooled and/or thermally stabilized via a cooling system 110a. The waveguide 120 is also cryocooled. The excitation energy is provided to the sample via an evanescent field 150, generated by side illumination using a laser 130 coupled with the waveguide or light guide plate 120 directed at the interface waveguide-sample at an angle of incidence higher than a critical angle, causing total internal reflection of the beam within the plate. The evanescent field 150 is generated in the top layer of the sample 110 at the interface with the outcoupling portion of the waveguide 120. The optical system 140 collects emission 180 from the sample 110. In particular, a microscope objective collects emission generated from dyes or fluorophores within the sample. Sectioning devices 160 and/or 170 may be used for removal of the top layer of the sample 110 after imaging. The sample is mounted on a motorized xyz stage 110b. The position of the xyz stage 110b is measured using interferometric means. A further super resolution setup images the emission of dyes through filters 140a onto a camera or other detector 140b. An ion milling device 160 is mounted on a vacuum chamber. A cutting or cryo-sectioning knife 170 on a computer-controlled stage allows a high precision removal of the top layers of the sample. A gas inlet 190 to form a cryogenic liquid is mounted on a vacuum chamber.

The vacuum chamber 100a is evacuated using vacuum pumps 190a. Also depicted is a vacuum port (load lock) 100b, which may be opened so as to introduce/remove items (components, specimens) to/from the interior of vacuum chamber 100a. A microscope system 100 may comprise a plurality of such ports, if desired. The microscope system 100 further comprises a controller/computer processing apparatus for controlling inter alia the objective position, sample 110 position, ion milling device 160, cutting knife 170 position and light guide 120 position and displaying information gathered from the camera or detector 140b on a display unit.

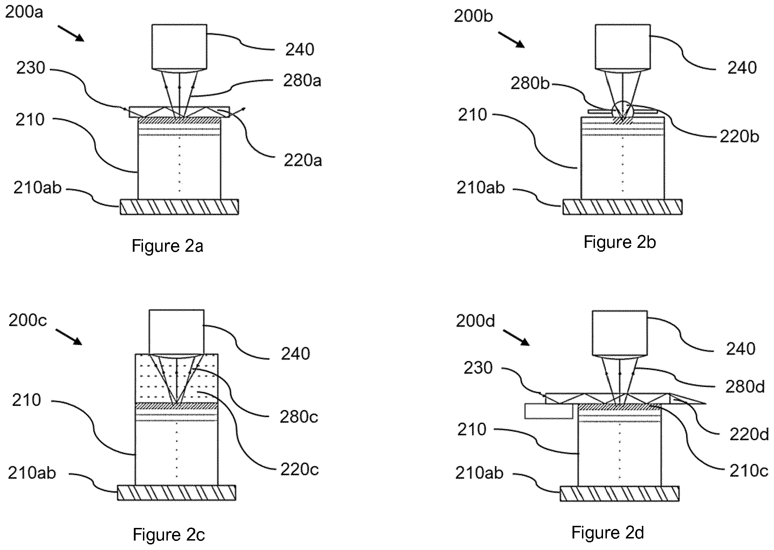

Figures 2a, 2b, 2c and 2d illustrate schematic representations of three exemplary implementations of the invention as herein described, utilizing different light coupling mediums. Figures 2a, 2b, 2c and 2d reproduce parts of figure 1, and namely the sample 210 on a cooling and/or positioning stage 210ab and components of the optical system 240 and are intended to show alternative arrangements of those parts to exemplify how different light coupling mediums may be utilized. In particular, as discussed in the description, total internal reflection can be achieved in various optical schemes, including prism-, lens-, and fiber-optic-based geometry, and in any of the configurations envisioned in the description and may be routinely modified by a skilled person based on the present invention.

In figure 2a a system 200a is shown, wherein a laser beam 230 is coupled into the light guide plate 220a in a side illumination configuration, generating an evanescent field at the top layer of the sample 210 for localized excitation of the fluorescence 280a within the sample 210. After imaging the top layer of the sample 210, the light guide plate 220a is removed and relocated on a new top layer of the sample 210, revealed after cutting or removing the imaged top layer.

In figure 2b a system 200b is shown, wherein the light coupling into the sample 210 is achieved through a solid immersion lens (SIL) 220b directly located onto the sample 210. Similarly to the light guide plate 220a of figure 2a, the SIL 220b has a higher refractive index than the sample 210 and forms under total internal reflection conditions an evanescent field in the top layer of the sample 210. The beam path of the excitation light 280b is formed by the objective and the SIL lens. After imaging the top layer, the SIL 220b is removed from the surface of the sample 210 and relocated on a new top layer of the sample 210, revealed after cutting or removing the imaged top layer. For imaging samples at cryogenic temperatures, such as frozen-hydrated samples, the light guide plate 220a or the SIL 220b are also at cryogenic temperatures. Both the light guide plate 220a and the SIL 220b have a refractive index higher than a refractive index of the sample 210.

Figure 2c shows a system 200c wherein a total internal reflection arrangement uses a cryogenic liquid 220c with a higher refractive index than the cryogenic sample 210. The beam path of the laser excitation light 280c is formed by the objective and the cryogenic liquid. Under total internal reflection conditions, the excitation light 280c couples into the sample and forms the evanescent field in the top layer. For each new top layer after cutting, the cryogenic liquid 220c is newly added. The use of cryogenic liquid 220c at low temperatures has similarities to the use of an immersion oil under room temperature conditions. However, a cryogenic liquid 220c has typically a lower refractive index than oil for room temperature measurements and it is in contact with the objective, leading to possible cooling of the objective and alterations of the imaging results.

Both a light guide plate and a solid immersion lens operate by being in contact with a surface of the sample to achieve total internal reflection or frustrated total internal reflection and form an evanescent field. In practice, a close to perfect physical and optical contact may be achieved by closing possible gaps at the nanometer level formed by the light guide plate or the SIL lens with the sample surface with a very thin layer of the cryogenic liquid or cryogenic fluid. A SIL-based setup may collect large amount of emitted fluorescence intensity by virtue of having the highest numerical aperture. However, the excitation and emission may be strongly dependent on direction, and therefore anisotropic. The light guide plate, however, enables a more efficient imaging of the sample, by exciting the largest sample area with the best signal-to-noise ratio in view of the localized excitation provided by the evanescent field uniform distributed across the surface of the top layer.

Further, figure 2d shows yet an alternative setup 200d wherein the light coupling medium 220d is integrated with a knife for removing the top layer of the sample 210, so that laser excitation light 230 is guided through the light coupling medium 220d integrated with the knife, and an evanescent field is generated in the top layer 210c of the sample 210 in contact with the light outcoupling portion of the light coupling medium 220d integrated with the knife. This configuration may provide a compact integration of the excitation function of the light coupling medium with the layer removal functionality of the knife, so that the top layer of the sample may be excited and imaged while the layer is being removed, or after removal of a previous top layer, a successive top layer may be imaged after removal, while the knife, and therefore the light coupling medium which is part of the knife, rests in contact with the top layer revealed by the removal process. An imaging step may be carried out while the light coupling medium of the knife couples light into the sample, i.e., the contact between the knife and the sample provides for a suitable contact for light incoupling. In alternative, the step of imaging may be carried out after the completion of the removal. For example, the imaging step may be carried out after the removing step without moving the knife in between. For instance, a final position of the knife at the end of the removing step may be the position of the knife during the imaging step. Said position may particularly be a position which allows light coupling from the knife to the sample. In any of these configurations, the integration or at least partial integration, may substantially reduce experimental times, for example image acquisition times and may further improve the excitation efficiency by providing a closer physical and optical contact between the light coupling medium and layer to be imaged. The skilled person would understand that notwithstanding such embodiments, the main features and functions of the light coupling medium as described at length above may be preserved.

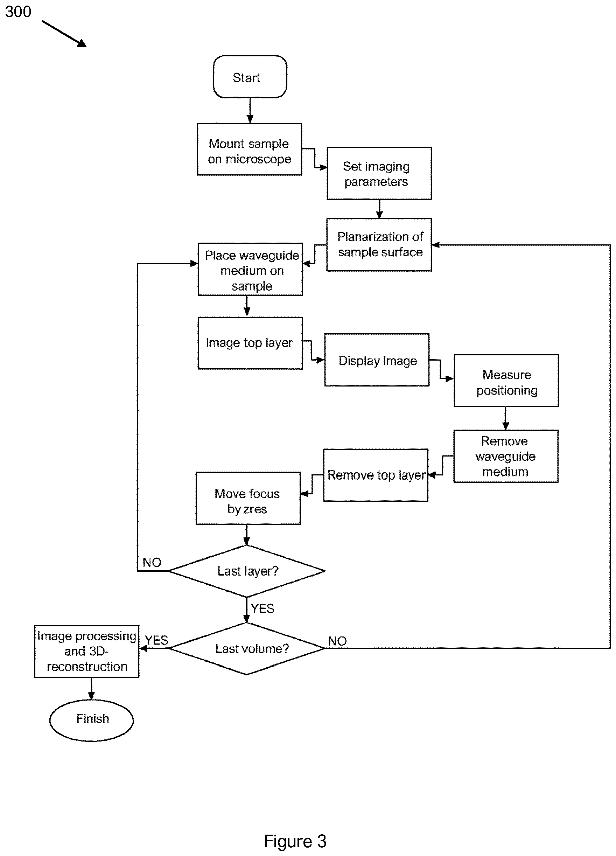

Figure 3 shows an exemplary diagram of a method 300 according to the invention, wherein exemplified steps are shown in succession. In the method 300, which can be a computer-implemented method, the steps of mounting the sample on a stage and setting the imaging parameters are performed. Subsequently, planarization of the surface of an adequately prepared sample according to imaging conditions is optionally executed and a waveguide medium or light plate or other light coupling medium is placed on the surface of the optionally planarized sample surface. Further, a top layer of the sample excited through the evanescent field generated by side illumination through the light guide via the outcoupling portion of the waveguide medium in contact with the sample, is imaged, the image is optionally displayed, and the position of the sample is optionally measured. The waveguide medium is removed, the imaged top layer is removed or ablated, the focus is optionally adjusted and the steps or placing the waveguide medium and subsequent are repeated until a last intended layer or last intended volume is imaged. The images are then processed, and a three-dimensional reconstruction of such images provides a three-dimensional image of the sample. In some embodiments the image processing may be performed in parallel to the imaging and/or may be performed for only a subset of the imaged layers, for instance for those that are already imaged at a given time. Put otherwise, a 3D reconstruction may be calculated on the fly. Further, in some embodiments where the light coupling medium is integrated with a layer removing device, and wherein for example the layer-removing device is a knife, the step of removing the light coupling medium prior to removing the top layer may be rephrased accordingly, since the light coupling medium is part of the knife, so that the methods steps are carried out as described above. In particular, the top layer of the sample may be excited and imaged while the layer is being removed, or after removal of a previous top layer, a successive top layer may be imaged after removal, while the knife, and therefore the light coupling medium which is part of the knife, rests in contact with the top layer revealed by the removal process. An imaging step may be carried out while the light coupling medium of the knife couples light into the sample, i.e., the contact between the knife and the sample provides for a suitable contact for light incoupling. In alternative, the step of imaging may be carried out after the completion of the removal. For example, the imaging step may be carried out after the removing step without moving the knife in between. For instance, a final position of the knife at the end of the removing step may be the position of the knife during the imaging step. Said position may particularly be a position which allows light coupling from the knife to the sample. The skilled person would understand that notwithstanding such embodiments, the main features and functions of the light coupling medium as described at length above may be reasonably preserved.

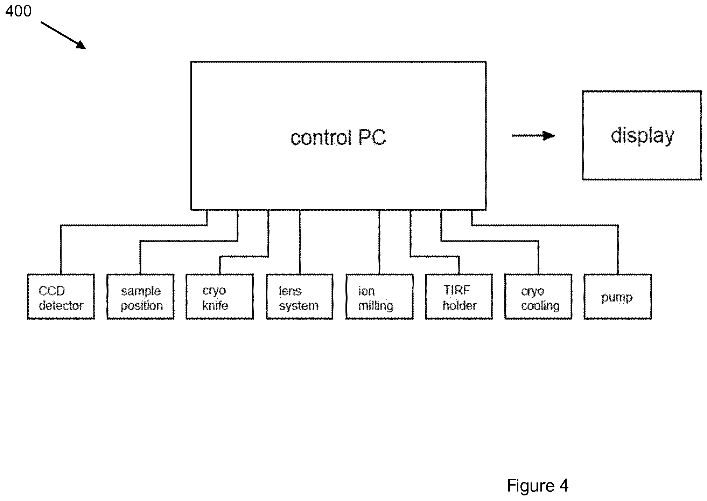

Figure 4 shows a schematic system 400 according to an aspect of the invention, comprising control devices and a processing unit to automate the operation and translation of the different components of the system. A graphical interface such as a display provides visualization of the imaging results and enables further image processing.

It will be understood that any suitable computer-readable medium may be utilized. The computer-readable medium may include, but is not limited to, a non-transitory computer-readable medium, such as a tangible electronic, magnetic, optical, infrared, electromagnetic, and/or semiconductor system, apparatus, and/or device. For example, in some embodiments, the non-transitory computer-readable medium includes a tangible medium such as a portable computer diskette, a hard disk, a random-access memory (RAM), a read-only memory (ROM), an erasable programmable read-only memory (EEPROM or Flash memory), a compact disc read-only memory (CD-ROM), and/or some other tangible optical and/or magnetic storage device. In other embodiments of the present invention, however, the computer-readable medium may be transitory, such as a propagation signal including computer-executable program code portions or executable portions embodied therein.

It will also be understood that one or more computer-executable program code portions or instruction code for carrying out or performing the specialized operations of the present invention may be required on the specialized computer include object-oriented, scripted, and/or unscripted programming languages, such as, for example, Java, Perl, Smalltalk, C++, SQL, Python, Objective C, and/or the like. In some embodiments, the one or more computer-executable program code portions for carrying out operations of embodiments of the present invention are written in conventional procedural programming languages, such as the "C" programming languages and/or similar programming languages. The computer program code may alternatively or additionally be written in one or more multi-paradigm programming languages, such as, for example, F#.

Embodiments of the present invention are described above with reference to flowcharts and/or block diagrams. It will be understood that steps of the processes described herein may be performed in orders different than those illustrated in the flowcharts. In other words, the processes represented by the blocks of a flowchart may, in some embodiments, be in performed in an order other that the order illustrated, may be combined or divided, or may be performed simultaneously. It will also be understood that the blocks of the block diagrams illustrated, in some embodiments, merely conceptual delineations between systems and one or more of the systems illustrated by a block in the block diagrams may be combined or share hardware and/or software with another one or more of the systems illustrated by a block in the block diagrams. Likewise, a device, system, apparatus, and/or the like may be made up of one or more devices, systems, apparatuses, and/or the like. For example, where a processor is illustrated or described herein, the processor may be made up of a plurality of microprocessors or other processing devices which may or may not be coupled to one another. Likewise, where a memory is illustrated or described herein, the memory may be made up of a plurality of memory devices which may or may not be coupled to one another.

It will also be understood that the one or more computer-executable program code portions may be stored in a transitory or non-transitory computer-readable medium (e.g., a memory, and the like) that can direct a computer and/or other programmable data processing apparatus to function in a particular manner, such that the computer-executable program code portions stored in the computer-readable medium produce an article of manufacture, including instruction mechanisms which implement the steps and/or functions specified in the flowchart(s) and/or block diagram block(s).

The one or more computer-executable program code portions may also be loaded onto a computer and/or other programmable data processing apparatus to cause a series of operational steps to be performed on the computer and/or other programmable apparatus. In some embodiments, this produces a computer-implemented process such that the one or more computer-executable program code portions which execute on the computer and/or other programmable apparatus provide operational steps to implement the steps specified in the flowchart(s) and/or the functions specified in the block diagram block(s). Alternatively, computer-implemented steps may be combined with operator and/or human-implemented steps in order to carry out an embodiment of the present invention.

While certain exemplary embodiments have been described and shown in the accompanying drawings, it is to be understood that such embodiments are merely illustrative of, and not restrictive on, the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations and modifications of the just described embodiments can be configured without departing from the scope and spirit of the invention. Therefore, it is to be understood that, within the scope of the appended claims, the invention may be practiced other than as specifically described herein.

## Claims

1. A method for total internal reflection microscopy imaging of a sample, comprising the steps of:
(a) providing the sample;
(b) placing a light coupling medium over a surface of the sample, the light coupling medium having a light incoupling portion and a light outcoupling portion, wherein the light outcoupling portion of the light coupling medium is in optical contact with the surface of a top layer of the sample;
(c) imaging the top layer of the sample through the light coupling medium, to obtain an image of the top layer;
(d) removing at least partially the top layer, thereby revealing a new top layer of the sample; and
(e) repeating steps (b) to (d) for one or more new top layers;
wherein the light coupling medium has a refractive index of at least 1.4, and
wherein the refractive index of the light coupling medium is higher than a refractive index of the sample; wherein excitation energy for imaging the top layer is provided via an evanescent field formed in the top layer of the sample at the interface with the light coupling medium; and wherein combining the obtained images generates a three-dimensional image of the sample.

2. The method of claim 1, further comprising the step of providing relative movement between the sample and an imaging system provided to carry out step (c), the relative movement being mediated by a computer-controlled translation stage.

3. The method of claims 1 or 2, wherein the step of removing is carried out with a knife, and wherein at least a portion of the knife is formed as the light coupling medium.

4. The method of any of the preceding claims, wherein the light coupling medium comprises a waveguide, a cryo-fluid, a prism, or a solid immersion lens, or any combination thereof.

5. The method of any of the preceding claims, wherein at least one of the layers has a thickness in a range from 10 to 400 nanometers, and preferably from 20 to 300 nanometers, more preferably from 35 to 250 nanometers, and even more preferably from 50 to 150 nanometers.

6. The method of any of the preceding claims, wherein the sample is a frozen-hydrated sample and wherein the light coupling medium is a cryocooled light coupling medium.

7. The method of any of the preceding claims, wherein the sample comprises fluorophores and/or wherein the step of imaging comprises super resolution fluorescence microscopy.

8. The method of any of the preceding claims, wherein at least one of the method steps is carried out at cryogenic temperatures.

9. A system for total internal reflection microscopy imaging of a sample, the system comprising:
a light source configured to provide excitation energy to the sample;
an optical system configured to couple the excitation energy from the light source into at least a top layer of the sample, the optical system comprising a light coupling medium having a light incoupling portion and a light outcoupling portion, the light coupling medium having a refractive index of at least 1.4, and wherein the light outcoupling portion of the light coupling medium is configured to be placed in optical contact with a surface of the top layer of the sample;
a positioning device configured to provide relative movement between the sample and the light source and/or at least elements of the optical system, wherein the positioning device in particular comprises a computer-controlled translation stage;
an imaging system configured to acquire an image of the top layer of the sample;
a layer-removing device configured to remove at least partially the top layer of the sample thereafter, and reveal a new top layer;
wherein the imaging device is further configured to generate an image of at least a portion of the sample based on images of one or more top layers.

10. The system of claim 9, wherein at least part of the system is configured to operate at cryogenic temperatures.

11. The system of any of claims 9 to 10, wherein the light coupling medium comprises a waveguide, a cryo-fluid, a prism, a solid immersion lens, or any combination thereof.

12. The system of any of claims 9 to 11, further comprising a super resolution fluorescence microscope.

13. The system of any of claims 9 to 12, further comprising an image processing device configured to process the plurality of images into a three-dimensional image of the sample.

14. The system of any of claims 9 to 13, wherein the layer-removing device is at least partially integrated with the optical system and comprises a knife, wherein at least a portion of the knife is formed as the light coupling medium.

15. The system of any of claims 9 to 14, further comprising at least one control device configured to carry out the method according to any of claims 1 to 8.
